# EUROPEAN PATENT APPLICATION

(11) **EP 4 810 314 A1**
(43) Date of publication of application: **23.09.2026**
(21) Application number: 24891626.4
(22) Date of filing: 10.09.2024
(51) Int. Cl.: B60N 2/22

(54) **RECLINING DEVICE FOR VEHICLE SEAT**

(30) Priority: 13.11.2023 KR 20230156460
(71) Applicant: Hyundai Transys Inc., Chungcheongnam-do 31930 (KR)
(72) Inventor: SHIN, Kyu Ha, Hwaseong-si, Gyeonggi-do 18463 (KR); KIM, Sung Chul, Hwaseong-si, Gyeonggi-do 18463 (KR)
(74) Representative: Viering, Jentschura & Partner mbB Patent- und Rechtsanwälte
(86) International application number: PCT/KR2024/013738
(87) International publication number: WO 2025/105679

(57) **Abstract**

The present invention provides a reclining device for a vehicle seat, the reclining device including a gear plate having an outer gear provided on an outer-diameter portion of the gear plate and configured to engage with an inner gear provided on an inner-diameter portion of a flange, the gear plate having an accommodation portion provided in an inner-diameter portion of the gear plate, and first and second cams assembled between a flange protrusion protruding from a center of the flange and a bearing inserted into the accommodation portion, in which outer-diameter portions of the first and second cams each include a first outer-diameter portion, and a second outer-diameter portion extending from the first outer-diameter portion, in which the first outer-diameter portion is in contact with an inner-diameter portion of the bearing, and in which the second outer-diameter portion has a gap from the inner-diameter portion of the gear plate without being in contact with the inner-diameter portion of the gear plate.

## Description

### [Technical Field]

The present invention relates to a reclining device for a vehicle seat.

### [Background Art]

In general, a seat provided in a vehicle may include a seatback configured to support a passenger's upper body, a seat cushion configured to support the passenger's lower body such as the passenger's buttocks and thighs, and a headrest configured to support the passenger's occiput. A reclining device for a vehicle seat, which is capable of adjusting an angle of the seatback in a forward/rearward direction with respect to the seat cushion, may be mounted on a connection portion between the seatback and the seat cushion.

The reclining device for a vehicle seat may be classified into a dial-type reclining device, a manual-type reclining device configured to adjust an angle of a seatback when a passenger manipulates a lever, and a power-type reclining device configured to operate automatically with power of a motor when a passenger manipulates a switch.

The reclining device for a vehicle seat may include a flange formed with an internal gear and provided with a flange protrusion provided at a center thereof, a gear plate formed with an external gear configured to engage with the internal gear, the gear plate being provided with a plate protrusion provided on a central portion of the gear plate, an input device provided with a central protrusion to which a recliner shaft is penetratively coupled, the input device being provided with a device protrusion provided on an outer portion of the central protrusion, a bearing assembled between the device protrusion and the plate protrusion, a pair of first and second cams disposed at left and right sides and assembled between the flange protrusion and the bearing, and a spring having two opposite ends that elastically support one end of the first cam and one end of the second cam that face each other.

When the recliner shaft rotates clockwise, the input device connected to the recliner shaft may rotate. As the input device rotates, the device protrusion provided on the input device may rotate.

When the device protrusion rotates, the device protrusion may rotate the first cam by pressing the first cam. The first cam may press one end of the spring while rotating. As a result, the two opposite ends of the spring become close to each other, and elastic forces of the two opposite ends of the spring are applied to the second cam, such that the second cam may rotate.

It is advantageous to increase lengths of the first and second cams, which surround the flange protrusion of the flange, to ensure strength. However, as the lengths of the first and second cams increase, abrasion of the bearing may be rapidly abraded due to an increase in frictional resistance between the first and second cams and the bearing.

### [Document of Related Art]

### [Patent Document]

(Patent Document 1) Korean Patent Application Laid-Open No. 10-2020-0064262 (published on June 8, 2020)

### [Disclosure]

### [Technical Problem]

The present invention has been made in an effort to solve the above-mentioned problem, and an object of the present invention is to provide a reclining device for a vehicle seat, the reclining device being capable of minimizing friction between first and second cams and a bearing.

### [Technical Solution]

In order to achieve the above-mentioned object, the present invention provides a reclining device for a vehicle seat, the reclining device including: a gear plate having an outer gear provided on an outer-diameter portion of the gear plate and configured to engage with an inner gear provided on an inner-diameter portion of a flange, the gear plate having an accommodation portion provided in an inner-diameter portion of the gear plate; and first and second cams assembled between a flange protrusion protruding from a center of the flange and a bearing inserted into the accommodation portion, in which outer-diameter portions of the first and second cams each include a first outer-diameter portion, and a second outer-diameter portion extending from the first outer-diameter portion, in which the first outer-diameter portion is in contact with an inner-diameter portion of the bearing, and in which the second outer-diameter portion has a gap from the inner-diameter portion of the gear plate without being in contact with the inner-diameter portion of the gear plate.

In addition, a diameter of the inner-diameter portion of the bearing may be smaller than a diameter of the inner-diameter portion of the gear plate.

In addition, one surface of the gear plate, one surface of the bearing, one surface of the first cam, and one surface of the second cam, which are directed toward the flange, may be tightly attached to one surface of the flange.

In addition, the reclining device may further include: an input device coupled to the flange protrusion.

In addition, the input device may be provided with a central protrusion inserted into the flange protrusion, a circular plate portion may be provided outside the central protrusion, first and second device protrusions may be provided at two opposite sides of the circular plate portion, and one end and the other end of an elastic member may be inserted into an insertion groove provided at one end of the first cam and an insertion groove provided at one end of the second cam.

In addition, a protruding portion may be provided on one surface of each of the first and second cams directed toward each of the first and second device protrusions, and one side surface of the protruding portion may be configured as an inclined surface.

In addition, one side surface of the protruding portion of the first cam may be pressed by one end of the first device protrusion, and one side surface of the protruding portion of the second cam may be pressed by one end of the second device protrusion.

In addition, one end of each of the first and second device protrusions may be configured as an inclined surface that conforms to one side surface of the protruding portion of each of the first and second cams.

In addition, one end of each of the first and second device protrusions may be positioned to be opposite to one side surface of the protruding portion of each of the first and second cams while passing through a horizontal central axis of the input device.

An inclination angle of one end of each of the first and second device protrusions may be configured to be 90 degrees to 120 degrees.

### [Advantageous Effects]

According to the present invention, it is possible to minimize friction between the first and second cams and the bearing.

In addition, according to the present invention, it is possible to prevent excessive deformation and compression of the bearing caused by an external force.

In addition, it is possible to minimize abrasion of the bearing.

### [Description of Drawings]

FIG. 1 is an exploded perspective view of a reclining device for a vehicle seat according to an exemplary embodiment of the present invention.
FIG. 2 is a partially cut-away perspective view of the reclining device for a vehicle seat according to the exemplary embodiment of the present invention.
FIG. 3 is an enlarged view of part A in FIG. 2.
FIG. 4 is a cross-sectional view of the reclining device for a vehicle seat according to the exemplary embodiment of the present invention.

### [Best Mode]

Hereinafter, exemplary embodiments of the present invention will be described in detail with reference to the accompanying drawings. First, in assigning reference numerals to constituent elements of the respective drawings, it should be noted that the same constituent elements will be designated by the same reference numerals, if possible, even though the constituent elements are illustrated in different drawings. In addition, in the description of the present invention, the specific descriptions of publicly known related configurations or functions will be omitted when it is determined that the specific descriptions may obscure the subject matter of the present invention. Further, the exemplary embodiments of the present invention will be described below, but the technical spirit of the present invention is not limited thereto and may, of course, be modified and variously carried out by those skilled in the art.

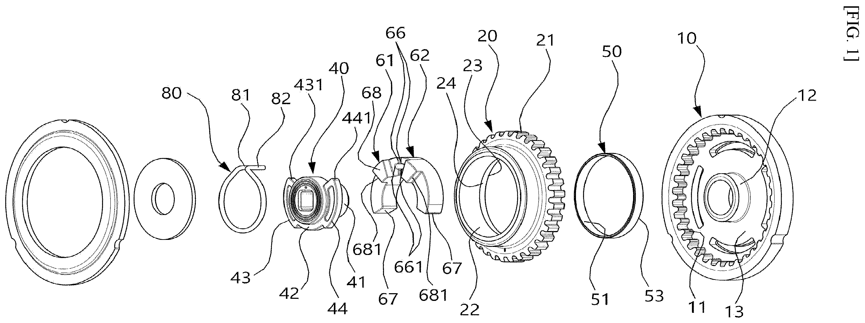

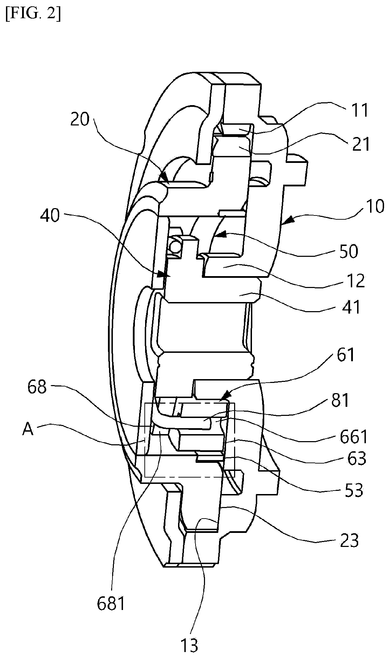

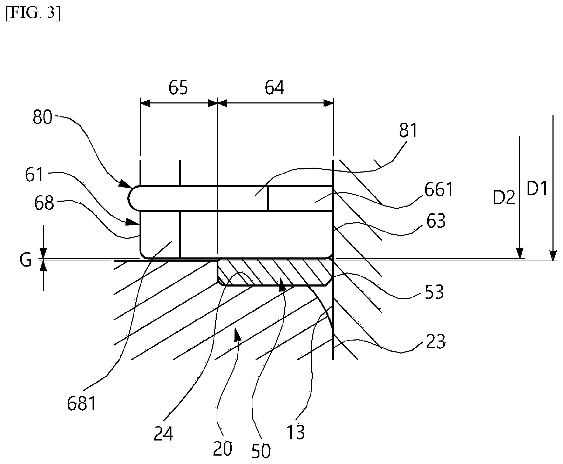

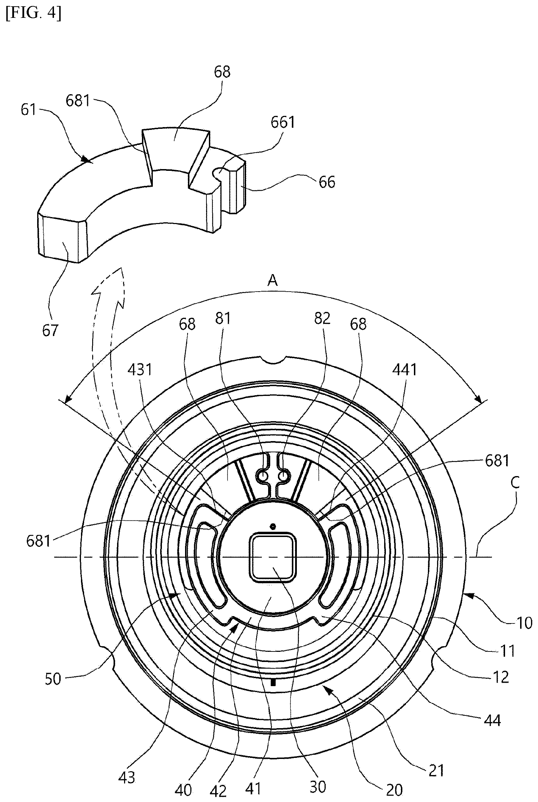

FIG. 1 is an exploded perspective view of a reclining device for a vehicle seat according to an exemplary embodiment of the present invention, FIG. 2 is a partially cut-away perspective view of the reclining device for a vehicle seat according to the exemplary embodiment of the present invention, FIG. 3 is an enlarged view of part A in FIG. 2, and FIG. 4 is a cross-sectional view of the reclining device for a vehicle seat according to the exemplary embodiment of the present invention.

As illustrated in FIGS. 1 to 4, the reclining device for a vehicle seat of the present invention may include a gear plate 20 having an outer-diameter portion on which an outer gear 21 is provided.

An accommodation portion 24 may be provided in an inner-diameter portion 22 of the gear plate 20. A bearing 50 may be accommodated in the accommodation portion 24. The accommodation portion 24 may be formed in a part of the inner-diameter portion 22 of the gear plate 20 directed toward a flange 10.

Because the bearing 50 is inserted into the accommodation portion 24 as described above, it is possible to prevent excessive deformation and compression of the bearing 50 caused by an external force.

The gear plate 20 may be inserted and assembled into an inner gear 11 provided on an inner-diameter portion of the flange 10. The outer gear 21 of the gear plate 20 may engage with the inner gear 11 of the flange 10.

The flange 10 may be provided with a flange protrusion 12. The flange protrusion 12 may protrude from a center of the flange 10 in a direction toward the gear plate 20.

First and second cams 61 and 62 may be assembled between the flange protrusion 12 and the bearing 50 so as to surround a periphery of the flange protrusion 12 of the flange 10. Outer-diameter portions of the first and second cams 61 and 62 may each include a first outer-diameter portion 64, and a second outer-diameter portion 65 extending from the first outer-diameter portion 64.

Because a diameter D2 of an inner-diameter portion 51 of the bearing 50 is smaller than a diameter D1 of the inner-diameter portion 22 of the gear plate 20, a gap G may be formed between the inner-diameter portion 22 of the gear plate 20 and the outer-diameter portions of the first and second cams 61 and 62 when the first and second cams 61 and 62 are assembled between the flange protrusion 12 and the bearing 50.

The first outer-diameter portions 64 of the first and second cams 61 and 62 may be in contact with the inner-diameter portion 51 of the bearing 50. Because of the gap G formed between the inner-diameter portion 22 of the gear plate 20 and the outer-diameter portions of the first and second cams 61 and 62, the second outer-diameter portions 65 of the first and second cams 61 and 62 may not be in contact with the inner-diameter portion 22 of the gear plate 20.

As described above, a height of the bearing 50 may be minimized to be smaller than a height each of the first and second cams 61 and 62 so that the bearing 50 conforms to the accommodation portion 24, and the first outer-diameter portions 64 of the first and second cams 61 and 62 may be only partially in contact with the inner-diameter portion 51 of the bearing 50, thereby minimizing friction between the bearing 50 and the first and second cams 61 and 62.

Surfaces 23, 53, and 63 of the gear plate 20, the bearing 50, and the first and second cams 61 and 62, which are directed toward the flange 10, may be assembled to be tightly attached to one surface 13 of the flange 10.

An input device 40 may be provided with a circular plate portion 42 provided outside a central protrusion 41. First and second device protrusions 43 and 44 may extend from two opposite sides of the circular plate portion 42.

An elastic member 80 may be assembled so that the elastic member 80 is tightly attached to one surface of the circular plate portion 42, and one end 81 and the other end 82 of the elastic member 80 are inserted into insertion grooves 661 provided at one end 66 of the first cam 61 and one end 66 of the second cam 62. For example, the elastic member 80 may be a spring.

Protruding portions 68 may be provided on one surface of the first cam 61 and one surface of the second cam 62. One side surface 681 of the protruding portion 68 of each of the first and second cams 61 and 62 may be configured as an inclined surface.

One side surface 681 of the protruding portion 68 of the first cam 61 may be pressed by one end 431 of the first device protrusion 43. One side surface 681 of the protruding portion 68 of the second cam 62 may be pressed by one end 441 of the second device protrusion 44.

One end 431 of the first device protrusion 43 and one end 441 of the second device protrusion 44 may each be configured as an inclined surface that conforms to one side surface 681 of the protruding portion 68 of each of the first and second cams 61 and 62.

One end 431 of the first device protrusion 43 and one end 441 of the second device protrusion 44 may each be positioned to be opposite to one side surface 681 of the protruding portion 68 of each of the first and second cams 61 and 62 while passing through a horizontal central axis C of each of the first and second device protrusions 43 and 44.

An inclination angle A of each of one end 431 of the first device protrusion 43 and one end 441 of the second device protrusion 44 may be configured to be 90 degrees to 120 degrees.

Next, an operation of the present invention will be described.

As illustrated in FIGS. 1 to 3, when a passenger manipulates a lever (not illustrated) or a switch (not illustrated), a recliner shaft 30 connected to the lever (not illustrated) or a drive motor (not illustrated) may rotate in one direction.

As the recliner shaft 30 rotates in one direction, the input device 40, which has an inner-diameter portion having an angular shape, such as a quadrangular shape, into which the recliner shaft 30 having an angular shape, such as a quadrangular shape, is inserted and coupled, may rotate in one direction. The first device protrusion 43 may rotate in one direction together with the input device 40, such that the first cam 61 may rotate in one direction.

Specifically, as the first device protrusion 43 rotates in one direction, one end 431 of the first device protrusion 43 may press one side surface 681 of the protruding portion 68 provided on the first cam 61. As a result, the first cam 61 may rotate in one direction.

As the first cam 61 rotates in one direction, one end 81 of the elastic member 80 coupled to the insertion groove 661 of the first cam 61 is pressed, and the elastic force of the other end 82 of the elastic member 80 is applied to the second cam 62, such that the second cam 62 may rotate in one direction.

In this case, the gear plate 20 may be rotated relative to the flange 10 by the rotation of the second cam 62 while generating a rotation ratio corresponding to a difference in number of teeth between the inner gear 11 and the outer gear 21, and a seatback (not illustrated) may be rotated by the rotation of the flange 10. As a result, an angle of the seatback (not illustrated) may be adjusted in a forward/rearward direction.

For example, the flange 10 may be connected to a seatback bracket (not illustrated), and the seatback bracket (not illustrated) may be connected to a seatback frame (not illustrated). The gear plate 20 may be connected to a seat cushion bracket (not illustrated) by a lower bracket (not illustrated). The seat cushion bracket (not illustrated) may be coupled to a seat cushion frame (not illustrated). With this structure, an angle between the seatback frame (not illustrated) and the seat cushion frame (not illustrated) may vary depending on a relative rotation between the flange 10 and the gear plate 20.

The above description is simply given for illustratively describing the technical spirit of the present invention, and those skilled in the art to which the present invention pertains will appreciate that various modifications, changes, and substitutions are possible without departing from the essential characteristics of the present invention. Accordingly, the embodiments disclosed in the present invention and the accompanying drawings are intended not to limit but to describe the technical spirit of the present invention, and the scope of the technical spirit of the present invention is not limited by the embodiments and the accompanying drawings. The protective scope of the present invention should be construed based on the following claims, and all the technical spirit in the equivalent scope thereto should be construed as falling within the scope of the present invention.

## Claims

1. A reclining device for a vehicle seat, the reclining device comprising:
a gear plate having an outer gear provided on an outer-diameter portion of the gear plate and configured to engage with an inner gear provided on an inner-diameter portion of a flange, the gear plate having an accommodation portion provided in an inner-diameter portion of the gear plate; and
first and second cams assembled between a flange protrusion protruding from a center of the flange and a bearing inserted into the accommodation portion,
wherein outer-diameter portions of the first and second cams each comprise a first outer-diameter portion, and a second outer-diameter portion extending from the first outer-diameter portion,
wherein the first outer-diameter portion is in contact with an inner-diameter portion of the bearing, and
wherein the second outer-diameter portion has a gap from the inner-diameter portion of the gear plate without being in contact with the inner-diameter portion of the gear plate.

2. The reclining device of claim 1, wherein a diameter of the inner-diameter portion of the bearing is smaller than a diameter of the inner-diameter portion of the gear plate.

3. The reclining device of claim 1, wherein one surface of the gear plate, one surface of the bearing, one surface of the first cam, and one surface of the second cam, which are directed toward the flange, are tightly attached to one surface of the flange.

4. The reclining device of claim 1, further comprising:
an input device coupled to the flange protrusion.

5. The reclining device of claim 4, wherein the input device is provided with a central protrusion inserted into the flange protrusion,
wherein a circular plate portion is provided outside the central protrusion,
wherein first and second device protrusions are provided at two opposite sides of the circular plate portion, and
wherein one end and the other end of an elastic member are inserted into an insertion groove provided at one end of the first cam and an insertion groove provided at one end of the second cam.

6. The reclining device of claim 5, wherein a protruding portion is provided on one surface of each of the first and second cams directed toward each of the first and second device protrusions, and one side surface of the protruding portion is configured as an inclined surface.

7. The reclining device of claim 5, wherein one side surface of the protruding portion of the first cam is pressed by one end of the first device protrusion, and one side surface of the protruding portion of the second cam is pressed by one end of the second device protrusion.

8. The reclining device of claim 6, wherein one end of each of the first and second device protrusions is configured as an inclined surface that conforms to one side surface of the protruding portion of each of the first and second cams.

9. The reclining device of claim 6, wherein one end of each of the first and second device protrusions is positioned to be opposite to one side surface of the protruding portion of each of the first and second cams while passing through a horizontal central axis of the input device.

10. The reclining device of claim 6, wherein an inclination angle of one end of each of the first and second device protrusions is configured to be 90 degrees to 120 degrees.
